# EUROPÄISCHE PATENTSCHRIFT

(11) **EP 2 409 907 B1**
(45) Veröffentlichungstag und Bekanntmachung des Hinweises auf die Patenterteilung: **11.04.2018**
(21) Anmeldenummer: 11006025.8
(22) Anmeldetag: 22.07.2011
(51) Int. Cl.: B62K 19/02, B62K 19/30, B62M 6/90, B60K 1/04

(54) **Fahhrad mit Energieversorgungseinrichtung**
Bicycle with energy supply device
Vélo doté d'un dispositif d'alimentation en énergie

(30) Priorität: 22.07.2010 DE 202010010522 U
(43) Veröffentlichungstag der Anmeldung: 25.01.2012
(73) Patentinhaber: Winora-Staiger GmbH, 97526 Sennfeld (DE)
(72) Erfinder: Puello, Felix, 97453 Schonungen (DE)
(74) Vertreter: Weigel, Matthias

(56) Entgegenhaltungen:
- EP-A1- 1 982 909
- WO-A1-2008/106976
- CN-Y- 201 105 785
- DE-A1-102008 047 087
- DE-U1- 20 319 887

## Beschreibung

Die vorliegende Erfindung betrifft ein Fahrrad nach dem Oberbegriff des Anspruchs 1.

Bei Fahrrädern ist es üblich, Energieversorgungseinrichtungen vorzusehen, um beispielsweise eine Beleuchtungseinrichtung oder einen elektromotorischen Antrieb des Fahrrades mit Energie zu versorgen. Abhängig von der benötigten Energiemenge ist es dabei bekannt, einen Verbraucher integral mit einer zugehörigen Energieversorgungseinrichtung auszubilden und diese gemeinsam, beispielsweise an einem Lenker oder einer Sattelstütze des Fahrrads, lösbar zu befestigen, wenn es sich bei dem Verbraucher um ein leistungsschwaches Gerät handelt, wie es häufig bei Beleuchtungseinrichtungen der Fall ist, welche ein oder mehrere LEDs zur Lichterzeugung aufweisen. Ein typisches Beispiel hierfür ist ein Rücklicht, welches rote LEDs aufweist, die entweder kontinuierlich leuchten oder mit einer vorbestimmten Frequenz blinken, um so ein auffällige Signal zu erzeugen und zu verhindern, dass das Fahrrad, beispielsweise bei Nacht, von einem nachfolgenden Fahrzeug übersehen wird.

Handelt es sich jedoch um einen leistungsstarken Energieverbraucher, wie zum Beispiel einen Halogen-Frontscheinwerfer oder einen Elektromotor, welcher zur Tretkraftunterstützung eingesetzt wird, ist die Energieversorgungseinrichtung aufgrund ihres Gewichts und ihrer Größe üblicherweise getrennt von dem Verbraucher an dem Fahrrad angebracht, beispielsweise an einem Gepäckträger des Fahrrads oder zwischen einem Sattelrohr und einem Hinterrad desselben.

Zur Befestigung einer getrennten Energieversorgungseinrichtung an einem Rahmen bzw. einem Rahmenelement eines Fahrrad ist die Verwendung eines separaten Aufnahmegehäuses bekannt, welches mittels entsprechender Befestigungselemente an dem Rahmenelement befestigt wird. Dieses bekannte Aufnahmegehäuse dient dabei sowohl zur stabilen Lagerung der Energieversorgungseinrichtung an dem Fahrrad als auch zum Schutz der Energieversorgungseinrichtung und von freiliegenden Kontaktelementen derselben beispielsweise vor äußeren Umwelteinflüssen, wie zum Beispiel Feuchtigkeit, Staub usw..

Da darüber hinaus eine zur Verwendung mit einem leistungsstarken Energieverbraucher bestimmte Energieversorgungseinrichtung (beispielsweise ein Akkumulator) üblicherweise ein hohes Gewicht aufweist, muss ferner sichergestellt sein, dass die zur Befestigung der Energieversorgungseinrichtung an dem Fahrrad verwendeten Befestigungselemente entsprechend stabil ausgebildet sind. Dies erfordert entsprechende Verstärkungen, welche jedoch das Gewicht der Befestigungseinrichtung und damit das Gewicht des Fahrrads erhöhen. Darüber hinaus sind derartige Befestigungseinrichtungen in aller Regel dem äußeren Erscheinungsbild des Fahrrads abträglich.

Aus der CN 201 105 785 Y ist ein Fahrrad bekannt, bei dem die untere Strebe des Fahrradrahmens als Aufnahme einer Energieversorgungseinrichtung dient. Die untere Strebe ist hierzu im Querschnitt betrachtet ein etwa rechteckiges, oben offenes Strangpressprofil, in welches die Energieversorgungseinrichtung eingesetzt ist. Das Strangpressprofil wird durch zwei in etwa parallel zueinander verlaufende Schenkel gebildet, welche von einer gemeinsamen Basis abstehen. Die oben offene Seite des Strangpressprofils wird mit Hilfe eines lösbar befestigten Deckels verschlossen. Zur Versteifung des Strangpressprofils ist am oberen Ende jedes Schenkels ein in Längsrichtung des Strangpressprofils verlaufender, in sich geschlossener Versteifungskanal ausgebildet.

Die EP 1 982 909 A1 offenbart ein Fahrrad, bei dem am Oberrohr oder am Sattelrohr eine Aufnahme für einen Halterahmen einer Energieversorgungseinrichtung vorgesehen ist. Das Oberrohr bzw. das Sattelrohr ist ein Hohlprofil mit mindestens einer Flachseite, von der zwei in etwa parallel beabstandet zueinander verlaufende Wände abstehen. Die Wände bilden gemeinsam mit der Flachseite des Hohlprofils die im Querschnitt in etwa rechteckige Aufnahme, in welche die Energieversorgungseinrichtung mit ihrem Halterahmen eingesetzt ist.

Aus der DE 203 19 887 U1 ist ein Fahrradrahmen bekannt, bei dem an einem der Rahmenrohre eine Ausnehmung zur Aufnahme von Kabeln ausgeformt ist.

Dem gegenüber ist es Aufgabe der Erfindung, ein Fahrrad mit einer Befestigungsstelle für eine Energieversorgungseinrichtung bereitzustellen, welche das äußere Erscheinungsbild des Fahrrads nicht beeinträchtigt und eine einfache und schnelle Montage der Energieversorgungseinrichtung an dem Fahrrad erlaubt, ohne jedoch das Gewicht des Fahrrads wesentlich zu erhöhen.

Erfindungsgemäß wird diese Aufgabe durch ein Fahrrad mit den Merkmalen nach Anspruch 1 gelöst.

Ein wesentlicher Gedanke der Erfindung ist dabei, einen beispielsweise konvex nach außen weisenden oder geradlinig verlaufenden Oberflächenabschnitt eines Rahmenelements nach radial innen zu verlagern bzw. konkav auszubilden, so dass ein im Querschnitt U-förmiges, geschlossene Hohlprofil entsteht, welches nicht nur im Hinblick auf die Festigkeit bzw. Steifigkeit des Rahmenelements gegenüber Rahmenelementen mit kreisförmigen, viereckigen oder mehreckigen Querschnitt gleichwertige, wenn nicht sogar verbesserte Eigenschaften aufweist, und gleichzeitig wenigstens eine Ausnehmung auszubilden, welche zur Aufnahme und Lagerung wenigstens eines Bereichs der als Batterie ausgebildeten Energieversorgungseinrichtung dient, um auf diese Weise ohne Bereitstellung zusätzlicher Bauteile eine optisch ansprechende und hinsichtlich ihrer Festigkeit bzw. Steifigkeit zuverlässige Befestigung für eine Energieversorgungseinrichtung zu erreichen.

Batterien im Zusammenhang mit der Erfindung sind sowohl aufladbare Batterien als auch so genannte Einwegbatterien, das heißt Batterien, welche nach Gebrauch entsorgt werden.

Erfingdungsgemäß weist die Energieversorgungseinrichtung ferner wenigstens zwei Kontaktelemente auf, welche zur elektrischen Verbindung mit wenigstens zwei an dem Rahmenelement angeordneten Gegenkontaktelementen verbunden werden können, wobei die Gegenkontaktelemente zur Energieübertragung zwischen der Energieversorgungseinrichtung und einem an dem Fahrrad angebrachten Verbraucher dienen. Die wenigstens zwei Gegenkontaktelemente sind dabei an wenigstens einem längsseitigen Ende der wenigstens einen Ausnehmung vorgesehen.

Ist die Energieversorgungseinrichtung entsprechend klein ausgebildet, ist es möglich, diese vollständig in der wenigstens einen Ausnehmung unterzubringen und vollständig im Rahmen "verschwinden" zu lassen. Um jedoch auch Energieversorgungseinrichtungen mit größerer Leistungsfähigkeit an einem Fahrrad anbringen zu können, kann erfindungsgemäß vorgesehen sein, dass die Energieversorgungseinrichtung wenigstens einen in der wenigstens einen Ausnehmung aufzunehmenden Vorsprung aufweist. Ferner ist es möglich, mehrere Energieversorgungseinrichtungen in der Ausnehmung anzuordnen und diese vorzugsweise miteinander zu koppeln.

Um eine optimale Raumausnutzung der wenigstens einen Ausnehmung und darüber hinaus eine zusätzliche Erhöhung der Steifigkeit des Rahmenelements zu ermöglichen, kann weiterhin vorgesehen sein, dass der wenigstens eine Vorsprung im wesentlichen komplementär zu der wenigstens einen Ausnehmung ausgebildet ist. Diesbezüglich kann es beispielsweise vorgesehen sein, dass die wenigstens eine Ausnehmung und der wenigstens eine Vorsprung, in Längsrichtung gesehen, im wesentlichen U-förmig ausgebildet sind. Diese Ausgestaltungsform hat unter anderem auch den Vorteil, dass beispielsweise bei Verwendung einer Energieversorgungseinrichtung, welche eine Vielzahl von einzelnen stabförmigen Energieversorgungselementen umfasst, die U-förmige Formgebung der wenigstens einen Ausnehmung an die einzelnen stabförmigen Energieversorgungselemente angepasst werden kann - oder umgekehrt, wodurch zum einen eine Relativbewegung zwischen den Energieversorgungselementen und der wenigstens einen Ausnehmung beziehungsweise dem Rahmen verhindert werden kann, und zum anderen durch die direkte Anlage der Energieversorgungselemente an einer Wandung der wenigstens einen Ausnehmung eine zusätzliche Versteifung des Rahmenelements möglich ist.

Um eine möglichst unauffällige Ausbildung der wenigstens einen Ausnehmung an dem Rahmenelements zu ermöglichen, kann beispielsweise vorgesehen sein, dass der wenigstens eine Vorsprung der Energieversorgungseinrichtung in Längsrichtung gegenüber den Längsenden der Energieversorgungseinrichtung zurückgesetzt ist, d.h. die Ausnehmung kleiner und kürzer als die Energieversorgungseinrichtung ausgebildet ist. Es handelt sich somit in diesem Fall um eine gegenüber den Gesamtabmessungen der Energieversorgungseinrichtung unauffällige Ausnehmung, welche jedoch aufgrund ihrer Steifigkeit auch zur Befestigung von Energieversorgungseinrichtungen mit sehr großen Abmessungen dienen kann. Obwohl in der nachfolgenden Beschreibung einer Ausführungsform der Erfindung lediglich eine Ausnehmung vorgesehen ist, soll dies jedoch nicht ausschließen, dass auch zwei oder mehrere voneinander beabstandete Ausnehmungen vorgesehen sein können, welche gemeinsam zur Lagerung einer Energieversorgungseinrichtung dienen.

Weiterhin kann vorgesehen sein, dass die Energieversorgungseinrichtung in Längsrichtung gesehen im wesentlichen T-förmig ausgebildet ist und zwar mit einem Querschenkel und einem orthogonal von der Mitte des Querschenkels abstehenden Längsschenkel, wobei der wenigstens eine Vorsprung den Längsschenkel das T-Profil bildet.

Um eine sichere Abstützung der Energieversorgungseinrichtung an dem Rahmenelement zu ermöglichen, kann weiterhin vorgesehen sein, dass die Unterseite des Querschenkels des T-Profils wenigstens abschnittsweise an dem Rahmenelement anliegt und sich an diesem abstützt.

Insbesondere dann, wenn der wenigstens eine Vorsprung der Energieversorgungseinrichtung in Längsrichtung gegenüber den Längsenden der Energieversorgungseinrichtung zurückgesetzt ist, ist es dann, wenn die Unterseite des Querschenkels des T-Profils an dem Rahmenelement anliegt, möglich, den gesamten Vorsprung abzudichten, wenn die Unterseite des Querschenkels des T- Profils unter Zwischenschaltung eines Dichtungselements an dem Rahmenelement anliegt.

Obwohl es natürlich möglich ist, die Ausnehmung an irgend einem beliebigen Rahmenelement eines Fahrrad vorzusehen, ist die Ausnehmung vorzugsweise an einem Unterrohr des Fahrrads vorgesehen, zum einen, da in vielen Fällen das Rahmenelement von allen Rahmenelementen am Fahrrad den größten Durchmesser hat, da es das Kopfrohr zum Abstützen eines Vorderrads direkt mit einem Tretlager verbindet, und zum anderen, da es ein Rahmenelement ist, welches weit von den Oberschenkeln und den Knien eines Fahrers entfernt ist und daher eine in der wenigstens einen Ausnehmung gelagerte Energieversorgungseinrichtung keine Behinderung für einen Fahrer des Fahrrads darstellt, wie es beispielsweise der Fall wäre, wenn die Ausnehmung an der Oberseite eines Oberrohrs ausgebildet wäre, da dann die Innenschenkeln eines Fahrers des Fahrrads beim Treten an der Energieversorgungseinrichtung reiben könnten.

Insbesondere dann, wenn ein Dichtungselement zur Abdichtung der Ausnehmung bzw. des Aufnahmeelements vorgesehen ist, kann vorgesehen sein, dass die wenigstens zwei Kontaktelemente an wenigstens einem längsseitigen Ende des wenigstens einen Vorsprungs der Energieversorgungseinrichtung vorgesehen sind, um mit den wenigstens zwei Gegenkontaktelemente an dem längsseitigen Ende der Ausnehmung verbunden zu werden, wodurch es möglich ist, die Kontaktelemente und Gegenkontaktelemente vor schädlichen Umwelteinflüssen zu bewahren, um dadurch beispielsweise eine Korrosion oder Oxidation der Kontaktelemente zu verhindern.

Um zu verhindern, dass sich die Energieversorgungseinrichtung während des Betriebs des Fahrrads aus der Ausnehmung löst, kann weiterhin vorgesehen sein, dass die Energieversorgungseinrichtung kraftschlüssig oder/und formschlüssig in der Ausnehmung festlegbar ist. Zur Erzeugung eines entsprechenden Reibschlusses zwischen dem Vorsprung und der Ausnehmung kann der wenigstens eine Vorsprung beispielsweise mit elastischen Ansätzen aus Gummi versehen sein, welche mit der Ausnehmung zusammenwirken, um die nötige Reibung zwischen der Ausnehmung und dem Vorsprung zu erzeugen. Alternativ können die elastischen Ansätze jedoch auch in entsprechende Vertiefungen in der Ausnehmung eingreifen, um ein Herausfallen der Energieversorgungseinrichtung aus der Ausnehmung zu verhindern. Alternativ oder zusätzlich ist es auch möglich, wenigstens ein Verriegelungselement vorzusehen, durch welches die Energieversorgungseinrichtung in der Ausnehmung formschlüssig verriegelt werden kann.

Vorzugsweise weist die Batterie ein der Form einer Batterie entsprechendes Gehäuse zur Aufnahme der Batterie oder einer Mehrzahl von Batteriezellen auf, wodurch es möglich ist, beispielsweise in ihrer Formgebung und in ihrer Kapazität genormte Batterien zu verwenden, welche einfach in ein den Anforderungen entsprechend ausgeformtes Gehäuse eingesetzt werden.

Weiterhin kann vorgesehen sein, dass das Fahrrad einen Elektromotor aufweist und dass die Energieversorgungseinrichtung als Energieversorgungsquelle des Elektromotors dient. Um in diesem Fall die Verdrahtung bzw. Kabelführung zu vereinfachen, wenn der Elektromotor im Bereich eines Tretlager des Fahrrads vorgesehen ist, um die Antriebsenergie über einen üblichen Kettenantrieb zum Hinterrad zu übertragen, kann vorgesehen sein, dass die wenigstens zwei Gegenkontaktelemente an dem Ende der Ausnehmung vorgesehen sind, welches dem Tretlager des Fahrrads nahe ist.

Eine Ausführungsform der Erfindung wird nachfolgend unter Bezugnahme auf die beigefügten Figuren näher erläutert. Darin zeigt:
- Fig. 1: eine perspektivische Ansicht einer an einem Rahmenelement eines Fahrrads anzubringenden Energieversorgungseinrichtung gemäß der Erfindung;
- Fig. 2: eine Schnittansicht der Energieversorgungseinrichtung längs der Linie II - II in Fig. 1;
- Fig. 3: eine perspektivische Schnittansicht durch eine an einem Rahmenelement angebrachte Energieversorgungseinrichtung längs der Linie III - III in Fig. 4; und
- Fig. 4: eine Seitenansicht eines Fahrradrahmens mit angebrachter Energieversorgungseinrichtung.

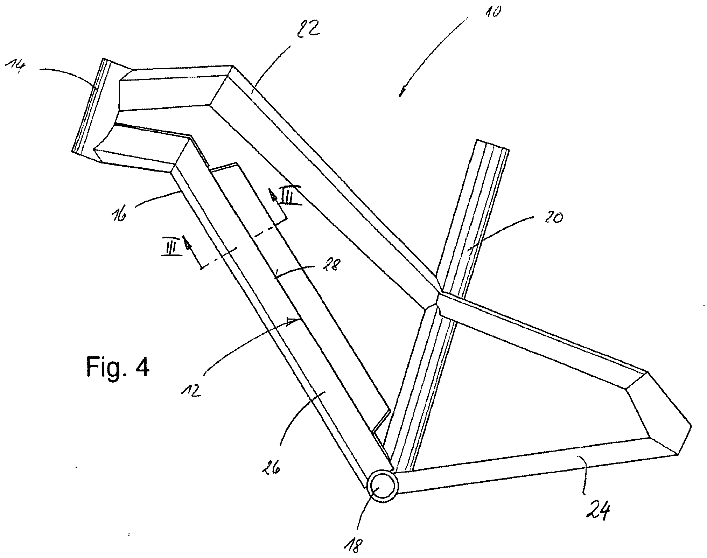

Fig. 4 zeigt eine linke Seitenansicht eines allgemein mit 10 bezeichneten Fahrradrahmens zur Lagerung einer Energieversorgungseinrichtung 12, welche als Energiequelle für einen nicht dargestellten Elektromotor zum Antreiben eines nicht dargestellten Hinterrads dient.

Der Fahrradrahmen 10 umfasst ein Kopfrohr 14, welches an der vorderen Seite des Fahrradrahmens 10 angeordnet ist; ein Unterrohr 16, welches sich von dem Kopfrohr 14 aus schräg nach hinten und nach unten zu einem Tretlager 18 erstreckt; ein Sattelrohr 20, welches sich von dem Tretlager 18 aus schräg nach oben und nach hinten erstreckt; ein Oberrohr 22, welches sich von dem Kopfrohr 14 aus schräg nach hinten und nach unten erstreckt und mit einem mittleren Abschnitt des Sattelrohrs 20 verbunden ist; und eine Hinterradgabel 24, welche sich von dem Tretlager 18 und dem hinteren Ende des Oberrohrs 22 aus nach hinten erstreckt, um das nicht dargestellte Hinterrad zu lagern.

Wie man in Fig. 4 erkennt, sind die vorderen Enden des Unterrohrs 16 und des Oberrohrs 22 jeweils gekröpft ausgebildet und erstrecken sich ausgehend von dem Kopfrohr 14 jeweils zunächst annähernd waagrecht und gehen dann jeweils in einen steil abfallenden Abschnitt über, wobei die Energieversorgungseinrichtung 12 an dem steil abfallenden Abschnitt des Unterrohrs 16, welcher im folgenden als Rahmenelement 26 bezeichnet wird, insbesondere an dessen schräg nach hinten und nach oben weisenden Fläche 28 angebracht ist.

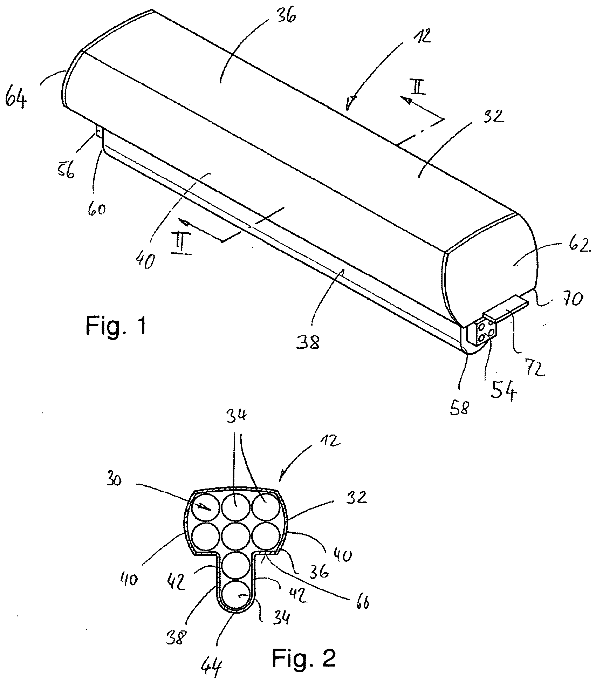

Die Energieversorgungseinrichtung 12, welche in dem in den Figuren 1 bis 4 dargestellten Beispiel einen Akkumulator 30 aufweist, besteht im wesentlichen aus einem lang gestreckten, im Querschnitt T- förmigen Gehäuse 32 zur Aufnahme einer Mehrzahl von stabförmigen Batteriezellen 34, welche miteinander elektrisch gekoppelt sind, um den Akkumulator 30 auszubilden. Das T-förmige Gehäuse 32 umfasst einen Querschenkel, beziehungsweise einen Gehäusehauptkörper 36, an dessen Unterseite 66 ein im wesentlichen U-förmiger Vorsprung 38 ausgebildet ist. Wie am besten in Fig. 2 zu sehen ist, ist der Gehäusehauptkörper 36 in der Schnittansicht tonnenförmig ausgebildet mit leicht nach außen gewölbten Seitenwänden 40, wohingegen die Seitenwände 42 des Vorsprungs 38 ausgehend von der Unterseite 66 des Gehäusehauptkörpers 36 geradlinig zum unteren Ende 44 des Vorsprung 38 verlaufen, welches unter Ende 44 halbkreisförmig ausgebildet ist, um zusammen mit den Seitenwänden 42 den Vorsprung 38 U-förmig auszubilden.

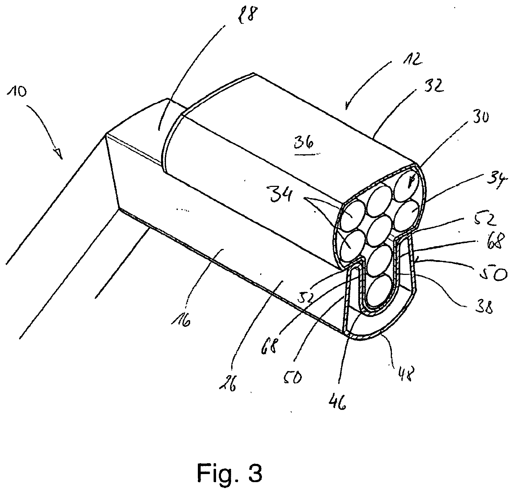

Unter Bezugnahme auf Fig. 3 ist der U-förmige Vorsprung 38 in eine komplementär zum Vorsprung 38 ausgebildete Ausnehmung 46 eingesetzt, welche in dem Rahmenelement 26 des Unterrohrs 16 ausgebildet ist. Das Rahmenelement 26 bildet zusammen mit der Ausnehmung 46 ein im Querschnitt U-förmiges, geschlossene Hohlprofil, dessen von der Energieversorgungseinrichtung 12 weg weisende untere Wand 48 annähernd halbkreisförmig ausgebildet ist und dessen an beiden Seiten des U-förmigen Vorsprung 38 angeordnete Seitenwände 50 im wesentlichen geradlinig und sich leicht verjüngend von der unteren Wand 48 in Richtung auf die Energieversorgungseinrichtung 12 zu erstrecken und in ihrem jeweiligen oberen Ende über einen halbkreisförmigen Bogen 52 in die im Querschnitt im wesentlichen U-förmige Ausnehmung 46 übergehen.

Zur Übertragung von Energie von der Energieversorgungseinrichtung 12, beispielsweise zu einem an dem Fahrradrahmen 10 angebrachten und nicht dargestellten Elektromotor, dienen zwei in Figur 1 dargestellte Kontaktelemente 54 und 56, welche zur elektrischen Verbindung mit wenigstens zwei an dem Rahmenelement 26 angeordneten und nicht dargestellten Gegenkontaktelementen dienen. Die Kontaktelemente 54 und 56 sind an den beiden längsseitigen Enden 58 und 60 des Vorsprungs 38 vorgesehen.

Um das Gewicht der Energieversorgungseinrichtung gleichmäßig auf das Rahmenelement 26 zu übertragen und einen Schutz der Kontaktelemente 54 und 56 bereitzustellen, ist der Vorsprung 38 der Energieversorgungseinrichtung 12 in Längsrichtung gegenüber den Längsenden 62 und 64 des Gehäusehauptkörpers 36 zurückgesetzt, wodurch die zu dem Vorsprung 38 beweisende Unterseite 66 des Gehäusehauptkörpers 36 vorzugsweise vollflächig und beispielsweise unter Zwischenschaltung eines nicht dargestellten Dichtungselements an der Fläche 28 des Unterrohrs 16 anliegt, um die gesamte Ausnehmung 46 abzudichten. Es ist diesbezüglich anzumerken, dass in der dargestellten Ausführungsform die Fläche 28 des Unterrohrs 16 und die Unterseite 66 des Gehäusehauptkörpers 36 flach ausgebildet sind, um eine flächige Anlage des Gehäusehauptkörpers 36 an dem Unterrohr 28 zu gewährleisten. Es ist jedoch aber auch möglich, die Dichtung beispielsweise an den Seitenwänden 42 des Vorsprungs 38 zum Zusammenwirken mit den zugeordneten Seitenwänden 68 der Ausnehmung 46 auszubilden, in welchem Fall eine vollflächige Anlage der Unterseite 66 des Gehäusehauptkörpers 36 an dem Unterrohr 16 zu Abdichtung beispielsweise der Ausnehmung 46 nicht notwendig wäre.

Wie man aus den Figuren 1 und 4 erkennen kann, verlaufen die Enden 62 und 64 des Gehäusehauptkörpers 36 leicht schräg in Richtung auf das Unterrohr 16 zu, und das Ende 62 des Gehäusehauptkörpers 36 weist an seinem vorsprungsseitigen Randbereich 70 eine Lasche 72 auf, welche beispielsweise als Griffelement dient, um das Ende 62 des Gehäusehauptkörpers 36 von dem Gehäusehauptkörper 36 lösen zu können, um so an die einzelnen Batteriezellen 34 des Akkumulator 30 zu gelangen, um diese beispielsweise auszutauschen oder separat zu laden.

Obwohl in den Figuren nicht näher dargestellt, ist vorgesehen, dass die Energieversorgungseinrichtung 12 kraftschlüssig oder/und formschlüssig in der Ausnehmung 46 festlegbar ist, wobei beispielsweise im Falle einer kraftschlüssigen Festlegung der Energieversorgungseinrichtung 12 diese Festlegung durch ein nicht näher dargestelltes Verriegelungselement erreicht werden kann, welches die Energieversorgungseinrichtung 12 in der Ausnehmung 46 sichert.

Obwohl in den Figuren dargestellt, kann das Gehäuse 32 der Energieversorgungseinrichtung 12 auch entfallen, wenn beispielsweise die Akkumulatoren 30 direkt in der Ausnehmung 46 aufgenommen sind. Es ist jedoch auch in diesem Falle zweckmäßig, einen Deckel zur Abdeckung der Ausnehmung 46 vorzusehen, um ein Eindringen von Schmutz und/oder Feuchtigkeit in die Ausnehmung 46 und den Bereich der Kontaktelemente 54 und 56 zu verhindern.

Abschließend wird darauf hingewiesen, dass die obige Beschreibung einer bevorzugten Ausführungsform der vorliegend Erfindung lediglich der Erläuterung der Erfindung dient und nicht als Beschränkung anzusehen ist.

## Patentansprüche

1. Fahrrad, das ein Rahmenelement (26) mit wenigstens einer Ausnehmung (46) zur Aufnahme wenigstens eines Bereichs (38) einer Energieversorgungseinrichtung (12) sowie eine zumindest bereichsweise in der Ausnehmung (46) eingesetzte Energieversorgungseinrichtung (12), die eine Batterie umfasst, aufweist, wobei das Rahmenelement (26) integral mit der wenigstens einen Ausnehmung (46) verbunden ist,
**dadurch gekennzeichnet,**
**dass** das Rahmenelement (26) zusammen mit der wenigstens einen Ausnehmung (46) ein im Querschnitt U-förmiges, geschlossenes Hohlprofil bildet und
**dass** die Energieversorgungseinrichtung (12) wenigstens zwei Kontaktelemente (54, 56) aufweist, welche zur elektrischen Verbindung mit wenigstens zwei an dem Rahmenelement (26) angeordneten Gegenkontaktelementen dienen, wobei die wenigstens zwei Gegenkontaktelemente an wenigstens einem längsseitigen Ende der wenigstens einen Ausnehmung (46) vorgesehen sind.

2. Fahrrad nach Anspruch 1, **dadurch gekennzeichnet, dass** die Energieversorgungseinrichtung (12) wenigstens einen in der wenigstens einen Ausnehmung (46) aufzunehmenden Vorsprung (38) aufweist.

3. Fahrrad nach Anspruch 2, **dadurch gekennzeichnet, dass** der wenigstens eine Vorsprung (38) im Wesentlichen komplementär zu der wenigstens einen Ausnehmung (46) ausgebildet ist.

4. Fahrrad nach Anspruch 3, **dadurch gekennzeichnet, dass** die wenigstens eine Ausnehmung (46) und der wenigstens eine Vorsprung (38), in Längsrichtung gesehen, im Wesentlichen U-förmig ausgebildet sind.

5. Fahrrad einem der Ansprüche 2 bis 4, **dadurch gekennzeichnet, dass** der wenigstens eine Vorsprung (38) der Energieversorgungseinrichtung (12) in Längsrichtung gegenüber den Längsenden der Energieversorgungseinrichtung (12) zurückgesetzt ist.

6. Fahrrad einem der Ansprüche 2 bis 5, **dadurch gekennzeichnet, dass** die Energieversorgungseinrichtung (12), in Längsrichtung gesehen, im Wesentlichen T-förmig ausgebildet ist mit einem Querschenkel (36) und einem orthogonal von der Mitte des Querschenkels (36) abstehenden Längsschenkel (38), wobei der wenigstens eine Vorsprung (38) den Längsschenkel des T-Profils bildet.

7. Fahrrad nach Anspruch 6, **dadurch gekennzeichnet, dass** die Unterseite (66) des Querschenkels (36) des T-Profils wenigstens abschnittsweise an dem Rahmenelement (26) anliegt.

8. Fahrrad nach Anspruch 7, **dadurch gekennzeichnet, dass** die Unterseite (66) des Querschenkels (36) des T-Profils unter Zwischenschaltung eines Dichtungselements an dem Rahmenelement (26) anliegt.

9. Fahrrad nach einem der vorhergehenden Ansprüche, **dadurch gekennzeichnet, dass** die wenigstens eine Ausnehmung (46) an einem Unterrohr (16) des Fahrrads vorgesehen ist.

10. Fahrrad nach einem der vorhergehenden Ansprüche, **dadurch gekennzeichnet, dass** die wenigstens zwei Kontaktelemente (54, 56) der Energieversorgungseinrichtung (12) an wenigstens einem längsseitigen Ende des Vorsprungs (38) der Energieversorgungseinrichtung (12) vorgesehen sind.

11. Fahrrad nach einem der vorhergehenden Ansprüche, **dadurch gekennzeichnet, dass** die wenigstens zwei Gegenkontaktelemente an dem Ende der wenigstens einen Ausnehmung (46) vorgesehen sind, welches einem Tretlager (18) des Fahrrads nahe ist.

12. Fahrrad nach einem der vorhergehenden Ansprüche, **dadurch gekennzeichnet, dass** die Energieversorgungseinrichtung (12) kraftschlüssig oder/und formschlüssig in der wenigstens einen Ausnehmung (46) festlegbar ist.

13. Fahrrad nach Anspruch 12, **dadurch gekennzeichnet, dass** die Energieversorgungseinrichtung (12) mittels wenigstens eines Verriegelungselements in der wenigstens einen Ausnehmung (46) festlegbar ist.

14. Fahrrad nach einem der vorhergehenden Ansprüche, **dadurch gekennzeichnet, dass** die Batterie (30) ein der Form der Batterie entsprechendes Gehäuse (32) zur Aufnahme der Batterie oder einer Mehrzahl von Batteriezellen (34) aufweist.

15. Fahrrad nach einem der vorhergehenden Ansprüche, **dadurch gekennzeichnet, dass** das Fahrrad einen Elektromotor aufweist und dass die Energieversorgungseinrichtung (12) als Energieversorgungsquelle des Elektromotors dient.

## Claims

1. A bicycle comprising a frame element (26) having at least one recess (46) for receiving at least one region (38) of a power supply device (12) and a power supply device (12) at least partially inserted in the recess (46) and comprising a battery, the frame element (26) being integrally connected to the at least one recess (46),
**characterized in that**,
the frame element (26) together with the at least one recess (46) forms a closed, hollow profile having a U-shaped cross section, and that the power supply device (12) comprises at least two contact elements (54, 56) for electrically connecting to at least two mating contact elements disposed on the frame element (26), wherein the at least two mating contact elements are provide on at least one longitudinal end of the at least one recess (46).

2. The bicycle according to claim 1, **characterized in that** the power supply device (12) comprises at least one protrusion (38) for being received in the at least one recess (46).

3. The bicycle according to claim 2, **characterized in that** the at least one protrusion (38) is implemented substantially complementary to the at least one recess (46).

4. The bicycle according to claim 3, **characterized in that** the at least one recess (46) and the at least one protrusion (38) are substantially U-shaped as seen in the longitudinal direction.

5. The bicycle according to any one of the claims 2 through 4, **characterized in that** the at least one protrusion (38) of the power supply device (12) is set back in the longitudinal direction relative to the longitudinal ends of the power supply device (12).

6. The bicycle according to any one of the claims 2 through 5, **characterized in that** the power supply device (12) is substantially T-shaped as seen in the longitudinal direction, having one transverse leg (36) and one longitudinal leg (38) protruding orthogonally from the center of the transverse leg (36), wherein the at least one protrusion (38) forms the longitudinal leg of the T-profile.

7. The bicycle according to claim 6, **characterized in that** the bottom side (66) of the transverse leg (36) of the T-profile contacts the frame element (26) at least in segments.

8. The bicycle according to claim 7, **characterized in that** the bottom side (66) of the transverse leg (36) of the T-profile contacts the frame element (26) having a sealing element interposed.

9. The bicycle according to any one of the preceding claims, **characterized in that** the at least one recess (46) is provided on a down tube (16) of the bicycle.

10. The bicycle according to any one of the preceding claims, **characterized in that** the at least two contact elements (54, 56) of the power supply device (12) are provided on at least one longitudinal end of the protrusion (38) of the power supply device (12).

11. The bicycle according to any one of the preceding claims, **characterized in that** the at least two mating contact elements are provided at the end of the at least one recess (46) near a bottom bracket (18) of the bicycle.

12. The bicycle according to any one of the preceding claims, **characterized in that** the power supply device (12) can be fixed in place in the at least one recess (46) by means of a force fit or/and by means of a form fit.

13. The bicycle according to claim 12, **characterized in that** the power supply device (12) can be fixed in place in the at least one recess (46) by means of at least one latching element.

14. The bicycle according to any one of the preceding claims, **characterized in that** the battery (30) comprises a housing (32) corresponding to the shape of the battery for receiving the battery or a plurality of battery cells (34).

15. The bicycle according to any one of the preceding claims, **characterized in that** the bicycle comprises an electric motor and that the power supply device (12) serves as a source of power for the electric motor.

## Revendications

1. Vélo ou bicyclette, qui comprend un élément de cadre (26) avec au moins un évidement (46) destiné à accueillir au moins une zone (38) d'un dispositif d'alimentation en énergie (12), ainsi qu'au moins un dispositif d'alimentation en énergie (12) inséré au moins en partie dans l'évidement (46) et comprenant une batterie, l'élément de cadre (26) étant lié de manière intégrale au dit au moins un évidement (46),
**caractérisé en ce que**
l'élément de cadre (26) forme, en commun avec ledit au moins un évidement (46), un profilé creux fermé et en forme de U en section transversale, et **en ce que** le dispositif d'alimentation en énergie (12) présente au moins deux éléments de contact (54, 56), qui servent à assurer le raccordement électrique à au moins deux éléments de contact conjugués agencés sur l'élément de cadre (26), lesdits au moins deux éléments de contact conjugués étant prévus au niveau d'au moins une extrémité de côté longitudinal dudit au moins un évidement (46).

2. Vélo selon la revendication 1, **caractérisé en ce que** le dispositif d'alimentation en énergie (12) présente au moins une protubérance (38) destinée à être accueillie dans ledit au moins un évidement (46).

3. Vélo selon la revendication 2, **caractérisé en ce que** ladite au moins une protubérance (38) est d'une configuration sensiblement complémentaire au dit au moins un évidement (46).

4. Vélo selon la revendication 3, **caractérisé en ce que** ledit au moins un évidement (46) et ladite au moins une protubérance (38) sont, vus dans la direction longitudinale, d'une configuration sensiblement en forme de U.

5. Vélo selon l'une des revendications 2 à 4, **caractérisé en ce que** ladite au moins une protubérance (38) du dispositif d'alimentation en énergie (12) est en retrait dans la direction longitudinale, par rapport aux extrémités longitudinales du dispositif d'alimentation en énergie (12).

6. Vélo selon l'une des revendications 2 à 5, **caractérisé en ce que** le dispositif d'alimentation en énergie (12), vu dans la direction longitudinale, est sensiblement d'une configuration en forme de T, avec une aile transversale (36) et une aile longitudinale (38) issue de manière orthogonale du milieu de l'aile transversale (36) en faisant saillie de celle-ci, ladite au moins une protubérance (38) constituant l'aile longitudinale (38) du profil en T.

7. Vélo selon la revendication 6, **caractérisé en ce que** le côté inférieur (66) de l'aile transversale (36) du profil en T s'appuie au moins par endroits, sur l'élément de cadre (26).

8. Vélo selon la revendication 7, **caractérisé en ce que** le côté inférieur (66) de l'aile transversale (36) du profil en T s'appuie sur l'élément de cadre (26) avec interposition d'un élément d'étanchéité.

9. Vélo selon l'une des revendications précédentes, **caractérisé en ce que** ledit au moins un évidement (46) est prévu sur un tube inférieur (16) du vélo.

10. Vélo selon l'une des revendications précédentes, **caractérisé en ce que** lesdits aux moins deux éléments de contact (54, 56) du dispositif d'alimentation en énergie (12) sont prévus à au moins une extrémité de côté longitudinal de la protubérance (38) du dispositif d'alimentation en énergie (12).

11. Vélo selon l'une des revendications précédentes, **caractérisé en ce que** lesdits au moins deux éléments de contact conjugués sont prévus à l'extrémité dudit au moins un évidement (46), qui est proche d'un palier de pédalier (18) du vélo.

12. Vélo selon l'une des revendications précédentes, **caractérisé en ce que** le dispositif d'alimentation en énergie (12) peut être fixé par adhérence ou/et par complémentarité de formes dans ledit au moins un évidement (46).

13. Vélo selon la revendication 12, **caractérisé en ce que** le dispositif d'alimentation en énergie (12) peut être fixé dans ledit au moins un évidement (46) au moyen d'au moins un élément de verrouillage.

14. Vélo selon l'une des revendications précédentes, **caractérisé en ce que** la batterie (30) comporte un boitier (32) correspondant à la forme de la batterie, et destiné à accueillir la batterie ou une pluralité d'éléments ou cellules de batterie (34).

15. Vélo selon l'une des revendications précédentes, **caractérisé en ce que** le vélo comprend un moteur électrique, et **en ce que** le dispositif d'alimentation en énergie (12) sert de source d'alimentation en énergie du moteur électrique.
